# EUROPÄISCHE PATENTSCHRIFT

(11) **EP 1 255 339 B1**
(45) Veröffentlichungstag und Bekanntmachung des Hinweises auf die Patenterteilung: **11.10.2006**
(21) Anmeldenummer: 01110907.1
(22) Anmeldetag: 05.05.2001
(51) Int. Cl.: H02G 7/05

(54) **Schraubenlose Keilspannklemme**
Boltless wedge clamp
Pince d'ancrage à cale sans vis

(43) Veröffentlichungstag der Anmeldung: 06.11.2002
(73) Patentinhaber: Richard Bergner Elektroarmaturen GmbH & Co.KG, 91126 Schwabach (DE)
(72) Erfinder: Bily, Libor, 6713 Ludesch (AT); Brettschneider, Ulf, Dipl.-Ing., 01189 Dresden (DE); Faber, Dietmar, Dipl.-Ing. (FH), 91785 Pleinfeld (DE); Grossmann, Steffen, Dr.-Ing., 01187 Dresden (DE); Linaschke, Rolf, 01445 Radebeul (DE)
(74) Vertreter: Heyner, Klaus

(56) Entgegenhaltungen:
- EP-A- 0 132 208
- EP-A- 0 486 375
- DE-A- 4 019 999
- FR-A- 2 647 878

## Beschreibung

Die Erfindung betrifft eine Keilabspannklemme zum Abspannen von Aluminium-, Aldrey-, Aluminium-Stahl und Aldrey-Stahl-Seilen, die ohne Schraubverbindungen auskommt und in Abspannketten für Mittel- und Hochspannungsfreileitungen eingesetzt werden kann.

Gattungsgemäße Keilabspannklemmen sind aus DE 40 19 999 A1, DE 43 12 535 A1 und EP 0212 643 B1 bekannt. In ihrem Grundaufbau bestehen sie aus einem meist zweiteiligen, gesenk-geschmiedeten Klemmenkörper, in dessen Innenraum die Klemmenkeile bzw. Seilaufnahmen eingeschoben werden. Dafür ist der Innenraum, die Keilkammer in Längs-/Einschubrichtung keilförmig ausgebildet. Die Aufhängung des Klemmenkörpers erfolgt über zwei seitliche Haltezapfen und ein zugehöriges Laschenpaar.

Allen bekannten Lösungen ist gemeinsam, dass die Innenseiten der im montierten Zustand des Klemmenkörpers einen geschlossenen Hohlraum bildenden Klemmenkörperschenkel Hinterschneidungsflächen besitzen. Diese Hinterschneidungsflächen ergeben eine V-Form, die der V-förmigen Außenseite der einzuführenden Klemmenkeile entsprechen und erforderlich sind für die Verbindung der Klemmenkörperteile.
Die Ausführung von Schmiedeteilen mit Hinterschneidungen bedingt höhere Fertigungsaufwendungen (Schmieden mit Schiebern) bzw. die zusätzliche mechanische Bearbeitung zum Herstellen der Hinterschneidungen mit damit verbundene höhere Werkzeugkosten.

Zur Ausführung der Haltezapfen sind auch Lösungen mit separaten Zapfen entwickelt worden (DE 43 12 535 A1), bei denen die Zapfen nach Herstellung des zweiteiligen Klemmenkörpers in die - in die Klemmenkörperhälften eingebrachten - Löcher eingehängt werden.

Bei allen bekannten Lösungen zur Ausführung der zweiteiligen Klemmenkeile bzw. Seilaufnahmen weist die außerhalb des Klemmenkörpers befindliche Seilauflage eine Schraubverbindung zur Arretierung des Seiles in der Seilauflage/Seilaufnahme auf. Derartige Schraubverbindungen bedingen einen höheren Montageaufwand.

Aufgabe der Erfindung ist es, die konstruktive Ausbildung der Keilabspannklemme mit dem Ziel der Effektivierung der Fertigung und Verringerung des Montageaufwandes bzw. Vereinfachung der Montage weiter zu verbessern.

Eine erfindungsgemäße Lösung dieser Aufgabe ist im Patentanspruch 1 angegeben. Weiterbildungen der Erfindung sind in den Unteransprüchen gekennzeichnet.

Nach der Konzeption der Erfindung sind die Klemmenkörperhälften zur Bildung einer Keilkammer ohne Hinterschneidungsflächen so ausgeführt, dass die Klemmenkörperhälften jeweils einen U-förmigen Querschnitt aufweisen, mit den Enden ihrer Seitenschenkel aufeinander bzw. sich gegenüber stehen und zur Verbindung der beiden Klemmenkörperhälften die aus dem U-Profil herauskragenden Seitenschenkelstege so ausgebildet sind, dass sie sich ineinander verhaken können.

Die vom U-Profil der Klemmenkörperhälften herauskragenden Seitenschenkelstege bilden die Eingriffselemente und sind paarweise als Falle und Klinke ausgeführt, s. Anspruch 4. Dabei ist die Falle in einen Steg eingebracht, der sich nach außen - vom U-Profil abgekröpft wegführend - in Verlängerung des betreffenden U-Schenkels erstreckt. Die Klinke steht als verkürzter Steg rechtwinklig vom jeweils anderen U-Schenkelende ab. Die Öffnung der Falle hat die Maße des Klinkenquerschnitts und nimmt im Zuge des Verbindungsvorganges der Klemmenkörperhälften die Klinke auf. Nach diesem beschriebenen Aufbau sind die Eingriffselemente Falle und Klinke so angeordnet, dass sie unter Bildung der geschlossenen Keilkammer ineinander geschoben und nach Einführung des Keilabschnitts der Seilaufnahme nicht mehr getrennt werden können.

Die mit diesem Aufbau ausgeführten Klemmenkörperhälften werden als Schmiedeteile vorzugsweise aus einer Al-Knetlegierung hergestellt. Sie ermöglichen über die formschlüssige Verhakung und Verriegelung der Klemmenkörperhälften eine einfache Montage und zuverlässige Sicherung gegen eine Längsverschiebung der Klemmenkörperhälften.
Durch den Schmiedevorgang wird die gesamte Geometrie des Gehäuses im Keilkammer- und Verhakungsbereich mit hoher Maßgenauigkeit ausgeführt. Der Innenraum des Klemmenkörpers, also die Keilkammer weist erfindungsgemäß nur eine Keilform in Längs- bzw. Einschubrichtung auf. Diese Keilform hat die Kontur des Keilabschnitts des zweiteiligen Seilaufnahmeteils.

Die Klemmenkörper und auch die separat hergestellten Zapfen sind Aluminium-Schmiedeteile. Dabei wird die Aufnahmebohrung für den Zapfen in den Klemmenkörper gelocht. Diese Lochung, die in Verbindung mit dem Schmiedevorgang ausgeführt wird, ist zwar kostengünstig jedoch auch mit fertigungstypischen und zum Teil erheblichen Durchmesser-Toleranzen behaftet.
Diese Durchmesser-Toleranzen werden dadurch ausgeglichen, dass der Zapfen nach dem Einsetzen in die Lochung gestaucht und in einer auf der Innenseite des Klemmenkörpers vorhandenen Vertiefung vernietet wird. Der dabei durch das Stauchen im Durchmesser vergrößerte Zapfen gewährleistet eine zuverlässige, formschlüssige und mechanisch hoch belastbare Verbindung.

Die zweiteilige Seilaufnahme besteht einmal aus einem Keilabschnitt mit Ober- und Unterteil, die das Seil umschließend in die Keilkammer des Klemmenkörper eingeschoben werden. Zum anderen besitzt die Seilaufnahme ein verlängertes Seilaufnahmeteil, das im Seilauslauf gebogen ausgeführt ist. Dieses verlängerte Seilaufnahmeteil dient zur Führung des Leiterseils im Bereich des Seilauslaufs (Stromschlaufe). Zu diesem Zweck wird das Leiterseil schraubenlos mittels mindestens eines erfindungsgemäßen Halteelements an dem verlängerten Seilaufnahmeteil befestigt.

Als Halteelemente werden einteilige oder zweiteilige, jeweils C-förmige Schellen eingesetzt. Die einteiligen Schellen greifen mit ihren an den Schenkelenden befindlichen Rastmitteln in einen Rastgegenpart ein, der in die Seitenzonen des verlängerten Seilaufnahmeteils eingearbeitet ist.
Die zweiteiligen Schellen bestehen aus zwei C-förmigen Elementen, dem Schellenoberteil und dem Schellenunterteil, die über an den jeweiligen Schenkelenden der Schellen befindliche Rast- oder Verriegelungselemente ineinander greifen und auf diese Weise eine geschlossene, das Leiterseil und das Seilaufnahmeteil umfassende Ringform bilden.

Sowohl die beiden Hälften des Klemmenkörpers als auch die beiden Teile der Seilaufnahme können zur Gewährleistung ihrer Unverlierbarkeit mittels eines geeigneten Verbindungselements gekoppelt werden, s. Ansprüche 3 und 7.
Bei der zweiteiligen Seilaufnahme wird diese Verbindungsfunktion einmal durch mindestens eine Haken-Nut-Paarung ausgeübt, die im Endbereich des Ober- und Unterkeils vorgesehen ist und mittels der die montagegerechte Positionierung und Verriegelung von Ober- und Unterkeil mit eingelegtem Leiterseil erfolgen kann, s. Anspruch 6. Zum anderen kann die Fixierung dieser Montageanordnung und Eintragung einer bestimmten Vorspannung vom o.g. Verbindungselement, beispielsweise einem Spannband übernommen werden, das ebenfalls im Endbereich von Ober- und Unterkeil angeordnet ist.

Weitere Einzelheiten, Merkmale und Vorteile der Erfindung ergeben sich aus der nachfolgenden Beschreibung eines Ausführungsbeispiels unter Bezugnahme auf die zugehörige Zeichnung.
Es zeigen
- Fig. 1: eine Gesamtansicht der schraubenlosen Keilabspannklemme im Einbauzustand mit Schnittdarstellungen zum Klemmenkörperaufbau,
- Fig. 2: eine Außen- und Schnittansicht zum Aufbau des Klemmenkörpers,
- Fig. 3: die Darstellung der zweiteiligen Seilaufnahme in zwei Ansichten (Seitenansicht und Draufsicht) mit Halteelement,
- Fig. 4: zwei Ausführungsformen des Halteelements, aufsitzend auf dem Seilauflauf,
- Fig. 5: eine Ausführungsform eines zweiteiligen, ringförmigen Halteelements.

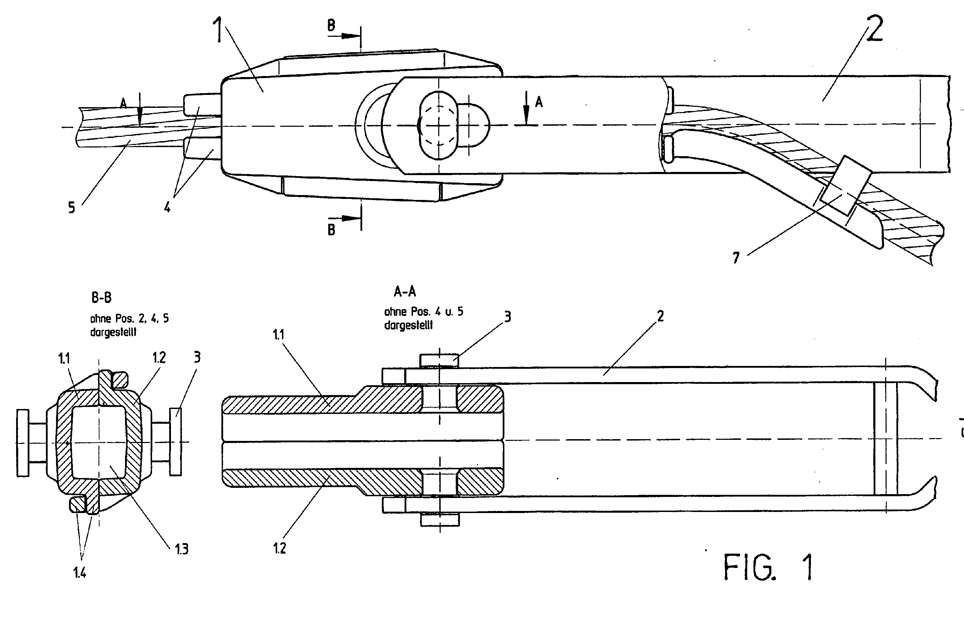

Fig. 1 veranschaulicht die erfindungsgemäße Keilabspannklemme in zwei Ansichten und einer gesonderten Schnittdarstellung B-B des Klemmenkörpers 1. Danach besteht die weiterentwickelte Keilabspannklemme aus den Teilen Klemmenkörper 1, Laschenpaar 2, das über die Zapfen 3 mit dem Klemmenkörper 1 verbunden ist, Seilaufnahme 4 mit eingelegtem Leiterseil 5 und Halteelement 6 in der Ausführung einer C-förmigen Schelle 7. Die Schnittdarstellung B-B zeigt den Aufbau des zweiteiligen Klemmenkörpers 1, bestehend aus den Klemmenkörperhälften 1.1 und 1.2, die die geschlossene Keilkammer 1.3 bilden. Die Verbindung der Klemmenkörperhälften 1.1, 1.2 erfolgt durch die ineinander geschobenen Eingriffselemente 1.4.

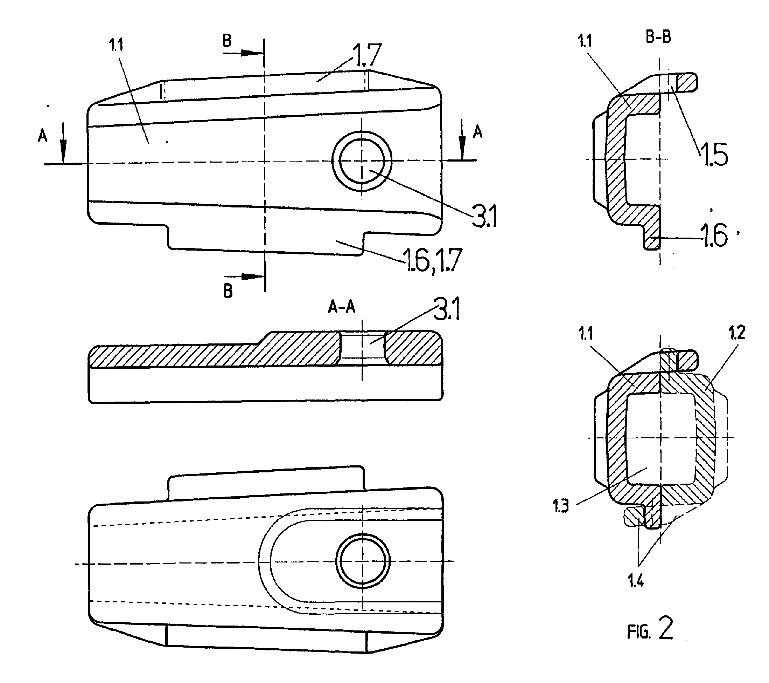

Fig. 2 zeigt den Grundaufbau des zweiteiligen Klemmenkörpers mit den Klemmenkörperhälften 1.1 und 1.2.
Aus den Schnittdarstellungen ist die U-form der Klemmenkörperhälften 1.1, 1.2 mit der sich daraus ergebenden Keilkammer 1.3, die frei ist von Hinterschneidungsflächen, deutlich zu erkennen.
An den Schenkeln der Klemmenkörperhälften 1.1, 1.2 sind - die Schenkelenden als Auflageflächen freihaltend - Stege 1.7 angeordnet, die als Eingriffselemente 1.4 ausgebildet sind. Diese Eingriffselemente sind paarweise als Falle 1.5 und Klinke 1.6 ausgeführt.
Zu erkennen ist auch die Öffnung bzw. Lochung 3.1 zur Aufnahme des Zapfens 3.
Über diese Eingriffs- bzw. Verriegelungselemente 1.4 erfolgt die zuverlässige Kopplung der Klemmenkörperhälften.

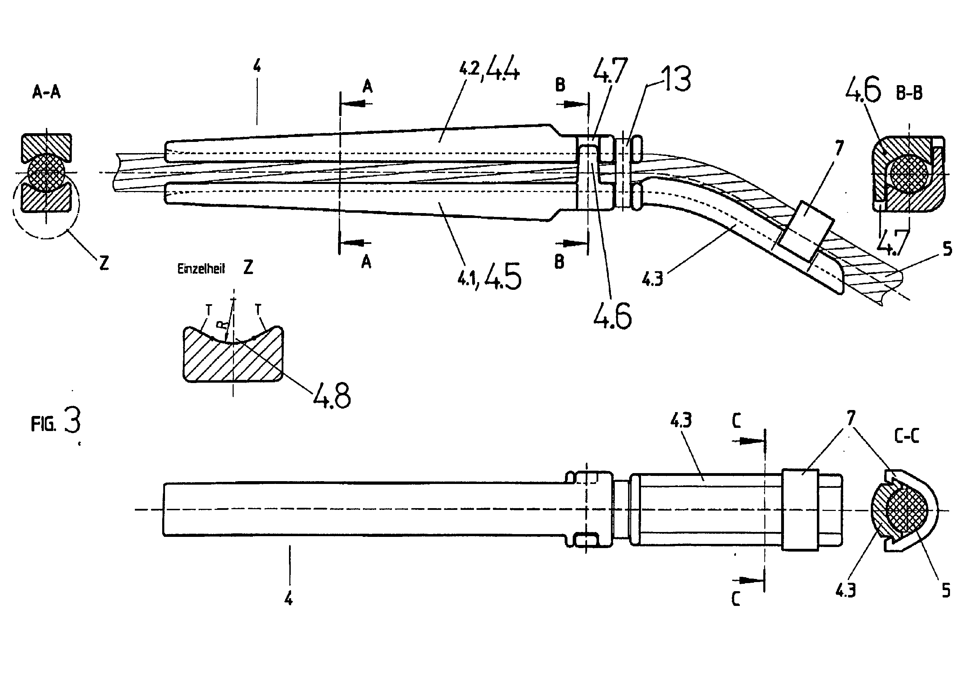

Fig. 3 veranschaulicht den Aufbau der zweiteiligen Seilaufnahme 4. Die obere Darstellung zeigt die Seitenansicht der Seilaufnahme 4 mit dem unten liegenden verlängerten Seilaufnahmeteil 4.1, dem darüber liegenden verkürzten Seilaufnahmeteil 4.2 und dem gekrümmten Seilauslauf 4.3.
Das Seilaufnahmeteil 4.1 ohne den Seilauslauf 4.3 und das Seilaufnahmeteil 4.2 bilden den Keilabschnitt der Seilaufnahme, der aus dem Oberkeil 4.4 und dem Unterkeil 4.5 besteht und in den Klemmenkörper und zwar in die hinsichtlich ihrer Kontur dem Keilquerschnitt angepasste Keilkammer 1.3 des Klemmenkörpers 1 eingeschoben wird. Das Leiterseil 5 wird zwischen den Seilaufnahmeteilen 4.1 und 4.2 geführt und liegt auf dem Seilauslauf 4.3 auf. Die Arretierung des Leiterseils 5 am Seilauslauf 4.3 erfolgt mittels der Schelle 7, s. auch die Draufsicht und Schnittdarstellung in der unteren Ansicht.

Die einbaugerechte Positionierung und Verriegelung von Ober- und Unterkeil 4.4, 4.5 mit dem eingelegten Leiterseil 5 erfolgt mittels der zwei Haken-Nut-Paarungen 4.6, 4.7.
Die Fixierung dieser zum Einschub in den Klemmenkörper 1 vorbereiteten Seilaufnahme 4 übernimmt das als Verbindungselement wirkende Spannband 13. Über diese Verbindung kann auch eine bestimmte Vorspannung in die beschriebene Montageanordnung eingetragen werden.
Aus der Einzelheit Z geht in Verbindung mit dem Schnitt A-A die Innenkontur von Ober- und Unterkeil 4.4, 4.5 und damit die Form des Seilkanals 4.8 hervor. Danach besteht der Kurvenzug des Seilkanals 4.8 aus einem Mittelteil mit dem Radius R und den sich beidseitig anschließenden Tangentialen T.

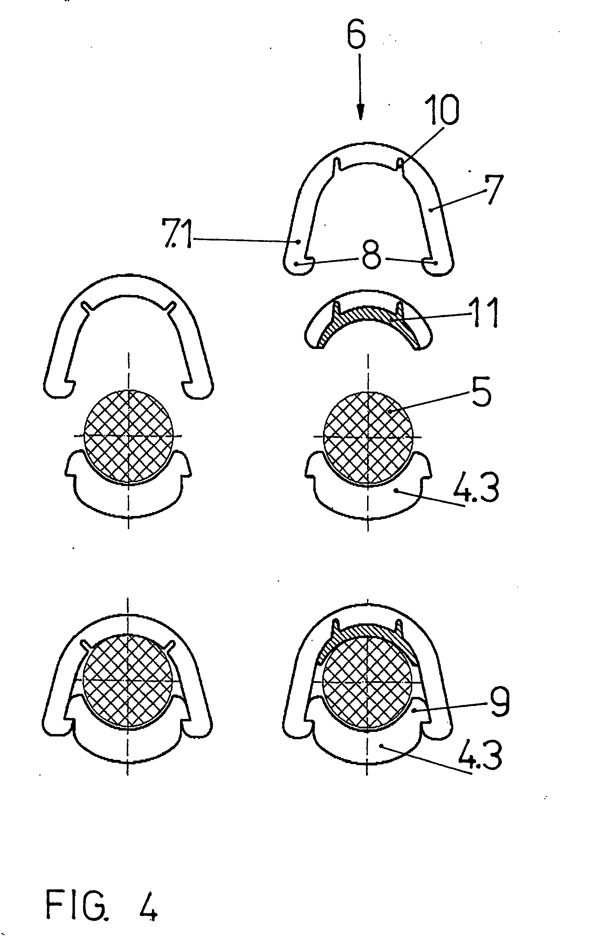

Den Aufbau des Halteelements 6 in der einteiligen Form, als C-förmige Schelle 7 aus einem Strangpressprofil oder einem gebogenen Federmaterial zeigt auch Fig. 4.
Dabei besitzt die C-förmige Schelle 7 an ihren Schenkelenden 7.1 Rastmittel 8, die in einen in den Seilauslauf 4.3 eingearbeiteten Rastgegenpart 9 eingreifen.
Mittels der Querschnittsverengungen 10 können die Schellen 7 ohne bleibende Verformung montiert werden.

Derartige Querschnittsverengungen gewährleisten die notwendige Montageelastizität und erleichtern damit die Montage.
Die Rastmittel 8 an den Schenkelenden 7.1 können auch in mehreren Raststufen ausgeführt werden.

Bei der Ausführungsform in der rechten Darstellung der Fig. 4 erfolgt die Anpassung an verschiedene Seildurchmesser 5 mittels einer geeigneten Einlage 11 aus beispielsweise Kunststoff. Diese Einlage 11 trägt auch bei zur seilschonenden Lagerung und Fixierung des Seiles 5 im Seilauslauf 4.3.
Eine weitere Funktion der Einlage 11 kann die Versteifung der C-förmigen Schelle 7 durch Auffüllen der Querschnittsverengungen 10 sein.

Der Rastgegenpart 9 am Seilauslauf 4.3 kann auch in Längsrichtung des Seilauslaufs 4.3 schräg oder stufenförmig in Bezug auf den Verlauf der gedachten Mittellinie des Seilauslaufs ausgeführt sein. Dadurch können für den Fall gleichbleibender Größe der C-förmigen Schelle 7 Seile 5 mit unterschiedlichem Seildurchmesser straff am Seilauslauf 4.3 gehalten und verspannt werden.

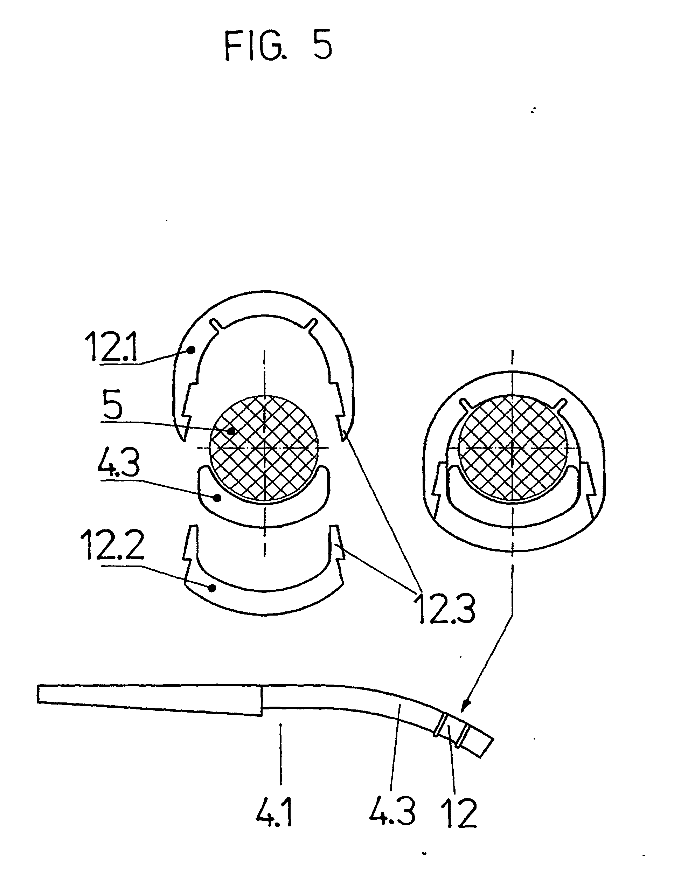

Gegenstand von Fig. 5 ist eine Ausführungsform eines zweiteiligen, ringförmigen Halteelements 12, bestehend aus einem C-förmigen Schellen-Oberteils 12.1 und einem Schellen-Unterteils 12.2. Beide Teile 12.1, 12.2 werden durch Rastelemente an ihren Schenkelenden 12.3 zu einem geschlossenen Ring zusammengefügt. Die geschlossene, ringförmige Schelle 12 besteht vorzugsweise aus zwei Strangpressprofilen, versehen mit geeigneten Verriegelungselementen an den Schenkelenden 12.3, die ineinander greifen und dabei das Leiterseil 5 im Seilauslauf 4.3 halten.

### Liste der Bezugszeichen

- 1: Klemmenkörper
1.1 Klemmenkörperhälfte
1.2 Klemmenkörperhälfte
1.3 Keilkammer
1.4 Eingriffselemente
1.5 Falle
1.6 Klinke
1.7 Steg
- 2: Laschenpaar
- 3: Zapfen (am Klemmenkörper)
3.1 Öffnung zur Aufnahme des Zapfens 3
- 4: Seilaufnahme
4.1 verlängertes Seilaufnahmeteil
4.2 verkürztes Seilaufnahmeteil
4.3 Verlängerung von 4.1, Seilauslauf
4.4 Oberkeil
4.5 Unterkeil
4.6 Haken
4.7 Nut
4.8 Seilkanal
- 5: Leiterseil
- 6: Halteelement
- 7: Schelle, Befestigungselement
7.1 Schenkelenden
- 8: Rastmittel an 7.1
- 9: Rastgegenpart an 4.3
- 10: Querschnittsverengungen
- 11: Einlagen
- 12: zweiteiliges Halteelement
12.1 Schellen-Oberteil
12.2 Schellen-Unterteil
12.3 Schenkelenden mit Rastelementen
- 13: Verbindungselement, Spannband

## Patentansprüche

1. Schraubenlose Keilabspannklemme zum Abspannen von Aluminium-, Aldrey-, Aluminium-Stahl und Aldrey-Stahl-Seilen in Abspannketten für Mittel- und Hochspannungsfreileitungen bestehend aus
a) einem zweiteiligen längsgeteilten Klemmenkörper (1), dessen Keilkammer (1.3) aus den mit den spiegelsymmetrisch mit den Seitenschenkelenden ihres U-Profil-Querschnitts aufeinander stehenden beiden Klemmenkörperhälften (1.1, 1.2) gleicher Geometrie gebildet wird, wobei die Keilkammer (1.3) keine Hinterschneidungsflächen aufweist und in Längs- und damit Einschubrichtung eine Keilform besitzt und zur Verbindung der Klemmenkörperhälften (1.1, 1.2) an den Enden der U-förmigen Seitenschenkel mindestens ein nach außen abstehendes Paar von Eingriffselementen (1.4) vorhanden ist, und der Klemmenkörper (1) mit einem Laschenpaar (2) mittels zweier Zapfen (3) verbunden ist,
b) einer zweiteiligen Seilaufnahme (4) mit im Keilabschnitt an die Kontur der Keilkammer (1.3) angepasster Keilform, die das Leiterseil (5) umschließend in den Klemmenkörper (1) eingeschoben wird, wobei eines der beiden Seilaufnahmeteile (4) verlängert und im Seilauslauf gebogen ausgeführt ist und das Leiterseil im Bereich des Seilauslaufs (4.3) auf dem verlängerten Seilaufnahmeteil (4.1) aufliegend oder anliegend schraubenlos mittels eines Halteelements (6) arretiert ist.

2. Keilabspannklemme nach Anspruch 1,
**dadurch gekennzeichnet, dass** der Klemmenkörper (1) und/oder die Seilaufnahmeteile (4.1, 4.2) als Schmiedeteil aus einer AluminiumKnetlegierung ausgeführt ist.

3. Keilabspannklemme nach Anspruch 1 oder 2,
**dadurch gekennzeichnet, dass** die Klemmenkörperhälften (1.1, 1.2) mittels mindestens eines Verbindungselementes, das eine scharnierartige einseitige Kopplung der Klemmenkörperhälften bewirkt, unverlierbar miteinander verbunden sind.

4. Keilabspannklemme nach einem der Ansprüche 1 bis 3,
**dadurch gekennzeichnet, dass** die Eingriffselemente (1.4) als Falle (1.5) und in diese Falle einschiebbare Klinke (1.6) ausgeführt sind, wobei die Falle (1.5) in einen Steg (1.7) eingebracht ist, der sich nach außen abgekröpft in Verlängerung des einen U-Schenkels der Klemmenkörperhälften (1.1, 1.2) erstreckt und die Klinke (1.6) rechtwinklig vom jeweils anderen U-Schenkelende der Klemmenkörperhälften nach außen absteht und die Öffnung der Falle (1.5) die Abmessungen des Klinkenquerschnitts aufweist, und wobei Falle (1.5) und Klinke (1.6) so angeordnet sind, dass die Stirnseiten der U-Schenkel als Auflagefläche der beiden Klemmenkörperhälften zur Bildung der Keilkammer (1.3) frei bleiben.

5. Keilabspannklemme nach einem der Ansprüche 1 bis 4,
**dadurch gekennzeichnet, dass** bei der Ausführung von Zapfen (3) und Klemmenkörper (1) als Alu-Schmiedeteile die Aufnahmebohrung (3.1) für den Zapfen (3) als mit groben Toleranzen behaftete Lochung ausgeführt ist und der durch die Lochung geführte Zapfen (3) auf den Lochungsdurchmesser gestaucht und in einer auf der Innenseite des Klemmenkörpers (1) vorhandenen Vertiefung vernietet ist.

6. Keilabspannklemme nach einem der Ansprüche 1 bis 5,
**dadurch gekennzeichnet, dass** zur Positionierung und Verriegelung von Oberkeil (4.4) und Unterkeil (4.5) der zweiteiligen Seilaufnahme (4) in der Montageposition bei zwischen Ober- und Unterkeil eingelegten Leiterseil (5) vor dem Einschieben der Keilverbindung in die Keilkammer (1.3) mindestens eine Haken (4.6)-Nut-(4.7)Paarung in Ober- und Unterkeil (4.4, 4.5) vorhanden ist.

7. Keilabspannklemme nach einem der Ansprüche 1 bis 6,
**dadurch gekennzeichnet, dass** zur Herstellung einer Verbindung der beiden Teile der Seilaufnahme (4) und damit zur Gewährleistung sowohl der Unverlierbarkeit der beiden Seilaufnahmeteile (4.1, 4.2) als auch zur Fixierung der Seilaufnahme auf dem Leiterseil (5) ein mit beiden Seilaufnahmeteilen (4.1, 4.2) verbundenes, von außen angreifendes Verbindungselement (13) in Form eines Spannbandes, einer Schlauchschelle oder dgl., mit oder ohne Nutführung, vorgesehen ist, das bei der Montage ein bestimmte Vorspannkraft auf die Montageanordnung Ober- und Unterkeil (4.4, 4.5) plus eingeschlossenes Leiterseil (5) ausüben kann.

8. Keilabspannklemme nach einem der Ansprüche 1 bis 7,
**dadurch gekennzeichnet, dass** der von den Innenseiten des Ober- und Unterkeils (4.4, 4.5) gebildete Seilkanal (4.8) sich in seiner Querschnittskontur zusammensetzt aus einem Mittelteil mit dem Radius R und beidseitig sich anschließenden Tangentialflächen T, (s. Einzelheit Z in Fig. 3).

9. Keilabspannklemme nach Anspruch 8,
**dadurch gekennzeichnet, dass** der Radius R in seiner Größe mindestens dem Radius des aufliegenden Leiterseiles (5) entspricht.

10. Keilabspannklemme nach einem der Ansprüche 1 bis 9,
**dadurch gekennzeichnet, dass** das verlängerte Seilaufnahmeteil (4.1) mit dem Seilauslauf (4.3) im Verbund der beiden Teile (4.1, 4.2) der Seilaufnahme (4) unten oder oben liegend als Gegenpart zum zweiten Seilaufnahmeteil (4.2) im Klemmenkörper (1) angeordnet ist.

11. Keilabspannklemme nach Anspruch 10,
**dadurch gekennzeichnet, dass** auf dem Seilauslauf (4.3) eine geeignete Profilierung in Form von Nasen und/oder Vertiefungen eingebracht ist.

12. Keilabspannklemme nach einem der Ansprüche 1 bis 11,
**dadurch gekennzeichnet, dass** als Halteelement (6) zur Arretierung des Leiterseils (5) auf der gebogenen Verlängerung (4.3) des Seilaufnahmeteils (4.1) mindestens eine C-förmige Schelle (7) vorgesehen ist.

13. Keilabspannklemme nach Anspruch 12,
**dadurch gekennzeichnet, dass** die C-förmige Schelle (7) aus einem Strangpressprofil oder einem gebogenen Federmaterial besteht.

14. Keilabspannklemme nach Anspruch 12 oder 13,
**dadurch gekennzeichnet, dass** die Schenkelenden der Schelle (7) Rastmittel (8) aufweisen, die in einen Rastgegenpart (9) eingreifen, der in die Seitenzonen der Verlängerung (4.3) des Seilaufnahmeteils (4.1) eingearbeitet oder im Bereich der Seitenzonen vorhanden ist.

15. Keilabspannklemme nach Anspruch 14,
**dadurch gekennzeichnet, dass** der Rastgegenpart (9) längs des verlängerten Seilaufnahmeteils (4.1) schräg oder stufenförmig am Seilauslauf (4.3) ausgeführt ist.

16. Keilabspannklemme nach einem der Ansprüche 1 bis 15,
**dadurch gekennzeichnet, dass** die C-förmige Schelle (7) mit der Verlängerung (4.3) des Seilaufnahmeteils (4.1) unverlierbar verbunden ist und durch Drehen und/oder Verschieben auf der Verlängerung (4.3) in die Halteposition für das Leiterseil (5) gebracht wird.

17. Keilabspannklemme nach einem der Ansprüche 12 bis 16,
**dadurch gekennzeichnet, dass** die C-förmige Schelle (7) Gelenke in Form von Querschnittsverengungen (10) aufweist.

18. Keilabspannklemme nach einem der Ansprüche 12 bis 17,
**dadurch gekennzeichnet, dass** insbesondere zur Anpassung an verschiedene Seildurchmesser die C-förmige Schelle (7) geeignete Einlagen (11) aufweist.

19. Keilabspannklemme nach Anspruch 18,
**dadurch gekennzeichnet, dass** die Einlagen (11) elastisch und aus Kunststoff und dgl. ausgeführt sind.

20. Keilabspannklemme nach einem der Ansprüche 1 bis 19,
**dadurch gekennzeichnet, dass** als Halteelement (6) eine zweiteilige, sich nach der Montage zu einem geschlossenen Ring ergänzende Schelle (12) vorgesehen ist, die aus einem C-förmigen Schellenoberteil (12.1) und einem C-förmigen Schellenunterteil (12.2) besteht, wobei die ringförmige Verbindung der beiden Schellenteile (12.1, 12.2) durch in den einander zugekehrten Schenkelenden (12.3) befindliche Rast- und Verriegelungselemente erfolgt.

## Claims

1. Boltless wedge clamp for straining aluminium-, Aldrey-, aluminium-steel- and Aldreysteel rope conductors in anchoring strings of intermediate-high-voltage and high-voltage lines including
a) a two-part clamp body (1) split longitudinally the wedge chamber (1.3) of which is formed by the geometrically identical clamp body halves (1.1, 1.2) mirror-symmetrically standing on each other with the side branch ends of their U-profile cross-section, whereby the wedge chamber (1.3) has no undercut surfaces and has a wedge shape in longitudinal, i.e. slide-in direction and there is at least one couple of engagement elements (1.4) at the ends of the U-shaped side branches for the connection of the clamp body halves (1.1, 1.2), and the clamp body (1) is connected to a pair of sideplates (2) by means of two trunnions (3),
b) a two-part rope socket (4) with wedge shape in the wedge portion adapted to the contour of the wedge chamber (1.3), whereby the rope socket (4) enclosing the overhead transmission conductor (5) is slided into the clamp body (1), whereby one of both rope socket parts (4) is extended and designed bent in the region of the rope outlet (4.3) and the conductor (5) in the region of the rope outlet (4.3) is arrested resting on or adjacent to the extended rope socket part (4.1) by means of the holding member (6).

2. Wedge clamp to claim 1
**characterized by** that the clamp body (1) and/or the rope socket parts (4.1, 4.2) are made as forgings of an aluminium wrought alloy.

3. Wedge clamp to claim 1 or 2
**characterized by** that the clamp body halves (1.1, 1.2) are captively connected to each other by means of a connection member which produces a hinge-like one-side coupling of the clamp body halves.

4. Wedge clamp to one of the claims 1 to 3
**characterized by** that the engagement elements (1.4) are configured as retainer (1.5) and latch (1.6) slidable into the retainer (1.5), whereby the retainer (1.5) is made as part of a rib (1.7), which extends outwards leading away from the U-section in offset manner extending of the one U-branch of the clamp body halves (1.1, 1.2), and the latch (1.6) protrudes rectangularly from the other U-branch of the clamp body halves (1.1, 1.2) and the opening of the retainer (1.5) has the dimensions of the latch (1.6), whereby the retainer (1.5) and the latch (1.6) are arranged so that the faces of the U-branches remain free as support surface of both clamp body halves for the formation of the wedge chamber (1.3).

5. Wedge clamp to one of the claims 1 to 4
**characterized by** that, with the trunnion (3) and the clamp body (1) made as aluminium forgings, the hole (3.1) to accept the trunnion (3) is designed as piercing loaded with coarse tolerances and the trunnion (3) lead through the piercing is upset to the piercing diameter and riveted in a recess provided on the inside of the clamp body (1).

6. Wedge clamp to one of the claims 1 to 5
**characterized by** that for positioning and locking of the upper wedge (4.4) and the lower wedge (4.5) of the two-part rope socket (4) in the assembly position with the overhead transmission conductor (5) inserted between the upper and lower wedges there is, before sliding in of the wedge connection into the wedge chamber (1.3), at least one hook (4.6)-recess (4.7) couple in the upper and lower wedges (4.4, 4.5).

7. Wedge clamp to one of the claims 1 to 6 . **characterized by** that for producing a connection of both parts of the rope socket (4) and, therefore, for ensuring captiveness of both rope socket parts (4.1, 4.2) as well as fixation of the rope socket on the overhead transmission conductor (5), a connection member (13) connected to both rope socket parts (4.1, 4.2) and applied from outside, in form of a retaining strap, a hose clamp or the like, with or without slot guidance, is provided that on assembly, can apply a predefined preload to the assembly arrangement upper and lower wedges (4.4, 4.5) plus enclosed overhead transmission conductor (5).

8. Wedge clamp to one of the claims 1 to 7 **characterized by that** the cross-sectional contour of the rope channel (4.8) formed by the insides of the upper and lower wedges (4.4, 4.5) is composed of a central portion with the radius R and two tangential surfaces T adjacent at both sides (see detail Z in Fig. 3).

9. Wedge clamp to claim 8
**characterized by** that the radius R corresponds in its magnitude at least with the radius of the resting overhead transmission conductor (5).

10. Wedge clamp to one of the claims 1 to 9
**characterized by that** the extended rope socket part (4.1) with the rope outlet (4.3), in compound of both parts (4.1, 4.2) of the rope socket (4), lying on bottom or top, is arranged as counterpart of the second rope socket part (4.2) in the clamp body (1).

11. Wedge clamp to claim 10
**characterized by** that a suitable profile in form of noses and/or recesses is provided on the rope outlet (4.3).

12. Wedge clamp to one of the claims 1 to 11
**characterized by that** as holding member (6) for arresting the overhead transmission conductor (5) on the bent extension (4.3) of the rope socket part (4.1) at least one C-shaped clamp (7) is provided.

13. Wedge clamp to claim 12
**characterized by** that the C-shaped clamp (7) is made of an extruded profile or a bent spring material.

14. Wedge clamp to claim 12 or 13
**characterized by** that the branch ends of the clamp (7) are provided with click-in means (8) which engage with a click-in counterpart (9) that is provided in the side zones of the extension (4.3) of the rope socket part (4.1) or is present in the region of the side zones.

15. Wedge clamp to claim 14
**characterized by** that the click-in counterpart (9) along the extended rope socket part (4.1) is configured inclined or stepped at the rope outlet (4.3).

16. Wedge clamp to one of the claims 1 to 15
**characterized by** that the C-shaped clamp (7) is captively connected to the extension (4.3) of the rope socket part (4.1) and put into the holding position of the overhead transmission conductor (5) by rotation and/or shifting on the extension (4.3).

17. Wedge clamp to one of the claims 12 to 16
**characterized by** that the C-shaped clamp (7) is provided with links in form of cross-section restrictions (10).

18. Wedge clamp to one of the claims 12 to 17
**characterized by** that, particularly for adaptation to different rope diameters, the C-shaped clamp (7) is provided with suitable inserts (11).

19. Wedge clamp to claim 18
**characterized by that** the inserts (11) are made to be elastic and of plastic material or the like.

20. Wedge clamp to one of the claims 1 to 19
**characterized by** that as holding member (6) a two-part clamp (12) completing itself to a closed ring is provided, whereby the clamp (12) consists of a C-shaped clamp upper part (12.1) and a C-shaped clamp lower part (12.2), whereby the annular connection of both clamp parts (12.1, 12.2) is produced by clicking and locking elements present at the branch ends (12.3) facing each other.

## Revendications

1. Pince d'ancrage à cale sans vis destinée à ancrer des câbles en aluminium, en aldrey, en acier-aluminium et en acier-aldrey dans des chaînes d'ancrage pour des lignes aériennes moyenne et haute tension, composée de :
a) un corps de pince (1) divisé en deux parties dans le sens de la longueur, dont la chambre de calage (1.3) est formée par les deux demi-corps de pince (1.1, 1.2) de même géométrie symétriques placés l'un sur l'autre avec les extrémités des ailes latérales de leur section profilée en U, la chambre de calage (1.3) ne comportant aucune surface de contre-dépouille et présentant une forme de calage dans le sens longitudinal et ainsi dans le sens d'insertion et au moins une paire d'éléments de prise (1.4) faisant saillie vers l'extérieur étant prévue au niveau des extrémités des ailes latérales en forme de U, pour relier les demi-corps de calage (1.1, 1.2) et le corps de pince (1) étant relié à une paire d'attaches (2) au moyen de deux chevilles (3),
b) un logement de câble (4) en deux parties avec une forme de calage adaptée au contour de la chambre de calage (1.3) dans la section de calage, qui est introduit en entourant le câble directeur (5) dans le corps de pince (1), une des deux parties du logement de câble (4) étant allongée et insérée courbée dans la sortie de câble et le câble directeur adjacent ou posé sur la partie allongée du logement de câble (4.1) étant bloqué sans vis au moyen d'un élément de retenue (6), dans la région de la sortie de câble (4.3).

2. Pince d'ancrage à cale selon la revendication 1,
**caractérisée en ce que** le corps de pince (1) et/ou les parties du logement de câble (4.1, 4.2) sont réalisées comme partie forgée en alliage corroyé d'aluminium.

3. Pince d'ancrage à cale selon la revendication 1 ou 2,
**caractérisée en ce que** les demi-corps de pince (1.1, 1.2) sont reliés l'un avec l'autre de façon imperdable au moyen d'au moins d'un élément de raccordement qui provoque un couplage unilatéral de type charnière des demi-corps de pince.

4. Pince d'ancrage à cale selon l'une des revendications 1 à 3,
**caractérisée en ce que** les éléments de prise (1.4) sont réalisés comme loquet (1.5) et comme leviers à cliquet (1.6) insérables dans ce loquet, le loquet (1.5) étant placé dans une entretoise (1.7) qui s'étend vers l'extérieur et est coudée dans le prolongement de l'une des ailes en U des demi-corps de pince (1.1, 1.2) et le levier à cliquet (1.6) s'éloignant vers l'extérieur à angle droit respectivement de l'autre extrémité de l'aile en U des demi-corps de pince et l'ouverture du loquet (1.5) présentant les dimensions de la section transversale du levier à cliquet, et le loquet (1.5) et le levier à cliquet (1.6) étant disposés de sorte que les parties de devant des ailes en U restent dégagées comme surface portante des deux demi-corps de pince pour former la chambre d'ancrage (1.3).

5. Pince d'ancrage à cale selon l'une des revendications 1 à 4,
**caractérisée en ce que**, lors de la réalisation de chevilles (3) et du corps de pince (1) comme parties forgées en aluminium, le perçage de réception (3.1) pour la cheville (3) est réalisé comme perçage avec des tolérances grossières et la cheville (3) introduite dans le perçage est refoulée sur le diamètre de perçage et est rivée dans un des évidements existants sur la partie intérieure du corps de pince (1).

6. Pince d'ancrage à cale selon l'une des revendications 1 à 5,
**caractérisé en ce qu'**au moins une paire de crochet (4.6)-rainure (4.7) est prévue dans la cale supérieure et la cale inférieure (4.4, 4.5) pour positionner et verrouiller la cale supérieure (4.4) et la cale inférieure (4.5) du logement de câble (4) divisé en deux dans la position de montage pour le câble directeur (5) placé entre les cales supérieure et inférieure avant d'insérer le raccord de calage dans la chambre de calage (1.3).

7. Pince d'ancrage à cale selon l'une des revendications 1 à 6,
**caractérisée en ce que** pour fabriquer un raccord des deux parties du logement de câble (4) et ainsi pour garantir à la fois le caractère imperdable des deux parties du logement de câble (4.1, 4.2) ainsi que la fixation du logement de câble au câble directeur (5), un élément de raccordement (13) agissant de l'extérieur et relié aux deux parties du logement de câble (4.1, 4.2) est prévu sous forme d'une bande de serrage, d'un collier de serrage ou élément similaire, avec ou sans guidage de rainure, lequel élément peut exercer, lors du montage, une certaine force de tension préalable sur la disposition du montage des cales supérieure et inférieure (4.4, 4.5) plus du câble directeur (5) inséré.

8. Pince d'ancrage à cale selon l'une quelconque des revendications 1 à 7,
**caractérisée en ce que** le conduit de câble (4.8) formé par les parties intérieures des cales supérieure et inférieure (4.4, 4.5) se compose dans son contour de section transversale d'une partie médiane avec un rayon R et des deux côtés de surfaces tangentes T adjacentes (voir détail Z sur la figure 3).

9. Pince d'ancrage à cale selon la revendication 8,
**caractérisée en ce que** le rayon R correspond dans sa dimension au moins au rayon du câble directeur (5) monté.

10. Pince d'ancrage à cale selon l'une des revendications 1 à 9,
**caractérisée en ce que** la partie du logement de câble (4.1) allongée est disposée avec la sortie de câble (4.3) associée aux deux parties (4.1, 4.2) du logement de câble (4) en dessous ou au-dessus comme partie opposée à la seconde partie du logement de câble (4.2) dans le corps de pince (1).

11. Pince d'ancrage à cale selon la revendication 10,
**caractérisée en ce qu'**un profil adapté sous forme de tenons et/ou d'évidements est prévu sur la sortie de câble (4.3).

12. Pince d'ancrage à cale selon l'une des revendications 1 à 11,
**caractérisée en ce qu'**au moins un collier en forme de C (7) est prévu comme élément de retenue (6) pour bloquer le câble directeur (5) sur le prolongement (4.3) courbé de la partie de logement de câble (4.1).

13. Pince d'ancrage à cale selon la revendication 12,
**caractérisée en ce que** le collier en forme de C (7) se compose d'un profilé filé ou d'un matériau à ressort courbé.

14. Pince d'ancrage à cale selon la revendication 12 ou 13,
**caractérisée en ce que** les extrémités des ailes du collier (7) comportent des moyens à cran d'arrêt (8), lesquels s'agrippent dans une partie opposée à cran d'arrêt (9) qui est usinée dans les zones latérales du prolongement (4.3) de la partie du logement de câble (4.1) ou qui est prévue dans la région des zones latérales.

15. Pince d'ancrage à cale selon la revendication 14,
**caractérisée en ce que** la partie opposée à cran d'arrêt (9) est réalisée le long de la partie de logement de câble (4.1) allongée de façon oblique ou échelonnée au niveau de la sortie de câble (4.3).

16. Pince d'ancrage à cale selon l'une des revendications 1 à 15,
**caractérisée en ce que** le collier en forme de C (7) est relié de façon imperdable au prolongement (4.3) de la partie de logement de câble (4.1) et est placée en position de retenue pour le câble directeur (5) par la rotation et/ou le décalage sur le prolongement (4.3).

17. Pince d'ancrage à cale selon l'une des revendications 12 à 16,
**caractérisée en ce que** le collier en forme de C (7) comporte des articulations en forme de rétrécissements de section transversale (10).

18. Pince d'ancrage à cale selon l'une des revendications 12 à 17,
**caractérisée en ce que** le collier en forme de C (7) comporte des pièces rapportées (11) ajustées pour s'adapter à différents diamètres de câble.

19. Pince d'ancrage à cale selon la revendication 18,
**caractérisée en ce que** les pièces rapportées (11) sont élastiques et réalisées en matière plastique ou matériau similaire.

20. Pince d'ancrage à cale selon l'une des revendications 1 à 19,
**caractérisée en ce qu'**un collier (12) en deux parties formant un anneau fermé après le montage est prévu comme élément de retenue (6), collier qui se compose d'une partie supérieure de collier (12.1) en forme de C et d'une partie inférieure de collier (12.2) en forme de C, le raccord en forme d'anneau des deux parties de collier (12.1, 12.2) s'effectuant grâce aux éléments à cran d'arrêt et de verrouillage qui se trouvent dans les extrémités des ailes (12.3) opposées l'une à l'autre.
